# EUROPÄISCHE PATENTSCHRIFT

(11) **EP 3 294 605 B1**
(45) Veröffentlichungstag und Bekanntmachung des Hinweises auf die Patenterteilung: **08.09.2021**
(21) Anmeldenummer: 16718355.7
(22) Anmeldetag: 25.04.2016
(51) Int. Cl.: B61G 5/10

(54) **SCHNITTSTELLENANORDNUNG FÜR EINE DATEN-, SIGNAL- UND/ODER SPRACHÜBERTRAGUNG**
INTERFACE ARRANGEMENT FOR DATA, SIGNAL AND/OR VOICE TRANSMISSION
DISPOSITIF D'INTERFACE POUR LA TRANSMISSION DE DONNÉES, DE SIGNAUX ET/OU DE LA PAROLE

(30) Priorität: 08.05.2015 DE 102015107230
(43) Veröffentlichungstag der Anmeldung: 21.03.2018
(73) Patentinhaber: Voith Patent GmbH, 89522 Heidenheim (DE)
(72) Erfinder: PRILL, Thomas, 30989 Gehrden (DE)
(74) Vertreter: Rupprecht, Kay
(86) Internationale Anmeldenummer: PCT/EP2016/059149
(87) Internationale Veröffentlichungsnummer: WO 2016/180622

(56) Entgegenhaltungen:
- EP-A1- 1 762 455
- EP-A1- 2 746 129
- WO-A1-2014/130551
- DE-A1- 19 713 913
- DE-A1- 19 926 058
- DE-A1-102011 079 551
- DE-A1-102011 079 551
- US-A- 3 696 758
- US-A1- 2007 054 562
- US-A1- 2010 241 295
- US-A1- 2014 163 769

## Beschreibung

Die vorliegende Erfindung betrifft eine Schnittstellenanordnung für eine Daten-, Signal- und/oder Sprachübertragung gemäß dem Oberbegriff des unabhängigen Patentanspruchs 1.

Demgemäß betrifft die Erfindung insbesondere eine Schnittstellenanordnung für eine Daten-, Signal- und/oder Sprachübertragung zwischen zwei benachbarten Wagenkästen eines mehrgliedrigen Fahrzeuges, insbesondere spurgeführten Fahrzeuges, wobei die Schnittstellenanordnung eine einem ersten Wagenkasten zugeordnete Elektrokontaktkupplung mit mindestens einem kupplungsebenenseitigen Kupplungskontakt aufweist zur Daten-, Signal- und/oder Sprachübertragung zu einer Gegen-Elektrokontaktkupplung eines dem ersten Wagenkasten benachbarten zweiten Wagenkastens.

Eine solche Schnittstellenanordnung zum Durchschalten von elektrischen und/optischen Daten- und/oder Signalleitungen zwischen zwei benachbarten Wagenkästen ist zumindest dem Prinzip nach aus der Schienenfahrzeugtechnik bekannt. Beispielsweise betrifft die Druckschrift EP 0 982 215 A1 eine Elektrokontaktkupplung für Schienenfahrzeuge, die einen Schnittstellenanordnung für eine Daten-, Signal- und/oder Sprachübertragung bildet und an einer Mittelpufferkupplung längsverschiebbar gehalten ist. Die aus diesem Stand der Technik bekannte Elektrokontaktkupplung weist eine Trägerplatte mit einer Vielzahl von Kontaktterminals auf, wobei die Kontaktterminals ausgebildet sind, mit entsprechenden komplementär hierzu ausgebildeten Kontaktterminals einer Gegen-Elektrokontaktkupplung eine Schnittstelle zur Daten-, Signal- und/oder Sprachübertragung auszubilden.

Die in der Schienenfahrzeugtechnik zum Einsatz kommenden Elektrokontaktkupplungen sind in der Regel im Stirnbereich der miteinander zu kuppelnden Wagenkästen angeordnet. Sie bestehen überwiegend aus metallenen Kupplungsgehäusen mit entsprechenden Einrichtungen zum Schutz der innenliegenden elektrischen Komponenten vor Umwelteinflüssen. Diese Einrichten umfassen insbesondere Schutzklappen, Dichtungssysteme und Kabelverschraubungen.

Die in dem Kupplungsgehäuse der aus dem Stand der Technik bekannten und in der Schienenfahrzeugtechnik üblicherweise eingesetzten Elektrokontaktkupplungen aufgenommenen elektrischen Komponenten bestehen im Wesentlichen aus hochspezialisierten Kupplungskontakten für die Übertragung verschiedenartiger elektrischer Signalarten sowie für die Energieübertragung. In diesem Zusammenhang sei beispielsweise auf die EP 1 753 089 A2, die US 2009/0004929 A1 und die DE 103 10 148 B4 verwiesen.
Die Dokumente DE 10 2011 079551 A1 und WO 2014/130551 A1 beschreiben beide eine Schnittstellenanordnung für eine Daten-, Signal- und/oder Sprachübertragung zwischen zwei benachbarten Wagenkästen eines mehrgliedrigen Fahrzeuges, insbesondere spurgeführten Fahrzeuges, wobei die Schnittstellenanordnung eine einem ersten Wagenkasten zugeordnete Elektrokontaktkupplung mit mindestens einem kupplungsebenenseitigen Kupplungskontakt aufweist zur Daten-, Signal-und/oder Sprachübertragung mit einer Gegen-Elektrokontaktkupplung eines im ersten Wagenkasten benachbarten zweiten Wagenkastens.

Aufgrund der hohen Anforderungen an die mechanische Robustheit und Dauerzyklusfestigkeit insbesondere beim Kuppeln und Entkuppeln sind Kupplungskontakte eine relativ kostenintensive Komponente der Elektrokontaktkupplung. Darüber hinaus ist es üblich, die Kupplungskontakte mit hochwertigen Leitungen und Kabeln zu verbinden, um diese an eine entsprechende elektrischen Kupplung-Zug-Schnittstelle anzuschließen.

Die verwendeten Leitungen und Kabel werden gewöhnlich einer bestimmten Leitungskategorie nach EN 50343 (Stand: Anmeldetag) zugeordnet und entsprechend zusammengefasst bzw. gebündelt. Hintergrund hierbei ist die bauliche Trennung von Leitungen unterschiedlichen Zwecks im Sinne der elektromagnetischen Verträglichkeit (EMV) . Beispielsweise ist die EMV-Leitungskategorie "A" für die Verkabelung von leistungsintensiven Anwendungen (z.B. Stromabnehmer, Antriebstechnik, Heizungen) mit gewöhnlich höheren Betriebsspannungen gedacht. Für die Zugsteuerungstechnik, die zumeist auf dem Spannungsniveau der Fahrzeugbatterie liegt, werden Verkabelungen der EMV-Leitungskategorie B zugeordnet. Verkabelungen von Elektroniksignalen, Signalgebern, Antennenleitungen und Datenbussystemen werden der EMV-Leitungskategorie "C" zugeordnet. Unterteilungen der einzelnen Kategorien, z.B. B1, B2...Bn oder C1, C2, ... Cn sind ebenfalls möglich. Aufgrund der inherenten Konzentration verschiedener EMV-Leitungskategorien im Bereich der Elektrokontaktkupplung ist dieser Zugkupplungskomponente im Sinne der EMV zunehmend besondere Aufmerksamkeit zu widmen.

Die elektrische Kupplung-Zug-Schnittstelle wird physisch in der Regel durch elektrische Steckverbindungen oder in Ausnahmefällen auch über Kabelklemmen im Wagenkasten realisiert. Diese elektrischen Steckverbindungen sind insbesondere auf hohe Anforderungen hinsichtlich Umwelteinflüsse (Korrosion, Dichtigkeit, IP-Schutzgrad und mechanische Robustheit) ausgelegt.

Aufgrund der häufig projektspezifischen Auslegung von Elektrokontaktkupplungen ist die Variantenzahl der verschiedenen Hersteller mittlerweile unüberschaubar und vergleichsweise teuer geworden. Die Elektrokontaktkupplung trägt heute bereits zu einem Großteil an den Kosten einer Zugkupplung bei.

Von daher ist eine Aufgabe der vorliegenden Erfindung darin zu sehen, eine Schnittstellenanordnung der eingangs genannten Art dahingehend weiterzubilden, dass diese insbesondere kostengünstiger ausgeführt ist, ohne dass die Fähigkeit zur projektspezifischen Auslegung verloren geht sowie die Erfüllung der Anforderungen an die Separation von EMV-relevanten Leitungskategorien im Sinne der EN 50343 zu vereinfachen.

Diese Aufgabe wird erfindungsgemäß durch den Gegenstand des unabhängigen Patentanspruchs 1 gelöst, wobei vorteilhafte Weiterbildungen der Erfindung in den abhängigen Ansprüchen angegeben sind.

Demnach wird insbesondere vorgeschlagen, dass der mindestens eine kupplungsebenenseitige Kupplungskontakt der dem ersten Wagenkasten zugeordneten Elektrokontaktkupplung über eine Datenbusverkabelung mit einem wagenkastenseitigen Kupplungskontakt einer elektrischen Kupplung-Zug-Schnittstelle des ersten Wagenkastens verbunden ist.

Durch die Verwendung einer Datenbusverkabelung zum Verbinden des mindestens einen kupplungsebenenseitigen Kupplungskontakts mit der entsprechenden elektrischen Kupplung-Zug-Schnittstelle des Wagenkastens ist es möglich, zumindest die wesentlichen Komponenten der Schnittstellenanordnung zu standardisieren und zu vereinheitlichen, so dass auch bei unterschiedlichen, projektspezifischen Auslegungen der Schnittstellenanordnung die Wiederverwendung (re-use) von Gleichteilen ermöglicht wird, so dass insgesamt die Kosten der Elektrokontaktkupplung bzw. Schnittstellenanordnung deutlich reduziert werden kann. Ferner wird zudem die Kombination verschiedener EMV-Leitungskategorien im Bereich der Elektrokontaktkupplung vermieden.

Bei der erfindungsgemäßen Lösung handelt es sich insbesondere um eine grundsätzliche Neubetrachtung einer Schnittstellenanordnung für eine Daten-, Signal- und/oder Sprachübertragung, und somit um eine Modernisierung der elektrischen Schnittstelle zwischen den einzelnen Wagenkästen eines mehrgliedrigen Fahrzeuges. Die Datenbusverkabelung erlaubt eine signifikante Reduktion der bei aus dem Stand der Technik bekannten Schnittstellenanordnungen zum Einsatz kommenden unterschiedlichen Kupplungskontakte, Leitungen und Kabeltypen (d.h. EMV-Leitungskategorien) sowie eine Reduktion der Anforderungen an verschiedene Ausführungen robuster und zyklusfester Elektrokontaktkupplungen. Von daher kann die Elektrokontaktkupplung und somit im weiteren Sinne auch die Schnittstellenanordnung maßgeblich vereinfacht und dadurch kostengünstiger ausgeführt werden.

Die dafür benötigte Anpassung der Leittechnikstruktur auf der Fahrzeugseite von bisher vielen heterogenen Einzelsignalen zwischen Subsystemen auf der Fahrzeugseite und zwischen den Wagenkästen hin zu deutlich in der Anzahl reduzierten datenbusgestützten Verbindungen führt darüber hinaus zu einer Verbesserung der Wartbarkeit, Diagnosefähigkeit, Konfigurierbarkeit (Software) und Skalierbarkeit sowie zu einer deutlichen Gewichtsreduktion der Elektrokontaktkupplung.

Insbesondere gestattet die erfindungsgemäße Lösung den vermehrten Einsatz von Glasfasersystemen in der Schnittstellenanordnung, wodurch maßgeblich Kupferanteile in der Fahrzeugverkabelung und damit Gewicht eingespart werden kann. Als zusätzliche Nebeneffekte sind zudem günstigere EMV-Eigenschaften zu erzielen, was eine bessere Störunempfindlichkeit und dadurch eine höhere Systemintegrität des Fahrzeuges befördert.

Besonders bevorzugt ist vorgesehen, wenn in der erfindungsgemäßen Schnittstellenanordnung eine einheitliche Datenbusverkabelung zwischen der Elektrokontaktkupplung und der Zugeinheit bzw. dem wagenkastenseitigen Kupplungskontakt der elektrischen Kupplung-Zug-Schnittstelle zum Einsatz kommt, welche die bei aus dem Stand der Technik bekannten Schnittstellenanordnungen üblicherweise zum Einsatz kommenden Verkabelungen unterschiedlicher Spezifikationen ersetzt. Hierdurch kann die elektrische Kontaktkupplung sowie die physische elektrische Kupplung-Zug-Schnittstelle maßgeblich vereinfacht werden.

Insbesondere ist es in diesem Zusammenhang von Vorteil, wenn die in der erfindungsgemäßen Schnittstellenanordnung zum Einsatz kommende Datenbusverkabelung zu einer vorab festgelegten, einheitlichen Link-Klasse gehört.

Die Link-Klasse einer Verkabelung spezifiziert dabei das Übertragungsverhalten für die komplette Übertragungsstrecke. Die Link-Klassen "A", "B", "C" und "D" sind ursprünglich für Gebäudeverkabelungen aber auch für industrielle Kommunikationsverkabelungen in der Norm ISO/IEC 11801 (Stand: Anmeldetag) definiert. Beispielsweise betrifft die Link-Klasse "A" Anwendungen mit niedrigen Datenraten und Frequenzen bis 100 kHz, während die Link-Klasse "B" Sprachanwendungen mit Frequenzen bis 1 MHz, die Link-Klasse "C" Sprach- und Datenübertragungen mit Frequenzen von 16 MHz - und die Link-Klasse "D" Datenübertragungen mit Frequenzen von 100 MHz betrifft. Datenübertragungen bis 250 MHz sind in der Link-Klasse "E" und Datenübertragungen bis 600 MHz in der Klasse "F" definiert

Vorzugsweise kommt bei der erfindungsgemäßen Schnittstellenanordnung als Datenbusverkabelung eine datenbusfähige Verkabelung zum Einsatz, die zur Link-Klasse "D" nach ISO/IEC 11801 gehört. Beispielsweise können hier Ethernet-Netze nach IEEE802.3 Clause 25 (100Base-Tx) bzw. IEEE802.3 Clause 40 (1000Base-T) angebunden werden. Selbstverständlich ist jedoch auch eine höhere Link-Klasse denkbar, wobei stets von Vorteil ist, dass eine einheitliche Datenbusverkabelung, d.h. eine Datenbusverkabelung einer Link-Klasse zum Einsatz kommt.

Für eine derartige vereinfachte Schnittstellenanordnung können für die Kupplungskontakte der Elektrokontaktkupplung, d.h. für die kupplungsebenenseitigen Kupplungskontakte, Datenbussteckverbindungen oder berührungslose (d.h. verschleißfreie) Systeme eingesetzt werden. Aufgrund der hohen Übertragungsraten von digitalen Datenbussystemen kann die bisherige heterogene Struktur ohne Performanceverlust über die Schnittstellenanordnung übertragen werden, wobei die Zuverlässigkeit der Übertragung zwischen zwei benachbarten Wagenkästen durch entsprechende Redundanzkonzepte beliebig skaliert werden kann.

Ferner ist es zweckmäßig, physikalisch getrennte Übertragungswege insbesondere für die Fahrzeugsteuerung und Entertainmentsysteme in Form von mehreren parallelen Datenbusnetzen vorzusehen. Zu diesem Zweck ist gemäß einer vorteilhaften Weiterbildung der erfindungsgemäßen Schnittstellenanordnung vorgesehen, dass mindestens ein von der Datenbusverkabelung bereitgestellter Übertragungsweg zur Daten-, Signalübertragung für eine Fahrzeugsteuerung ausgebildet ist, wobei mindestens ein anderer von der Datenbusverkabelung bereitgestellter Übertragungsweg zur Daten-, Signal- und/oder Sprachübertragung für ein Fahrzeug-Entertainmentsystem ausgebildet ist.

Nachfolgend werden unter Bezugnahme auf die Zeichnungen exemplarische Ausführungsformen der erfindungsgemäßen Schnittstellenanordnung näher beschrieben.
- FIG. 1: schematisch eine aus dem Stand der Technik bekannte Schnittstellenanordnung für eine Daten-, Signal- und/oder Sprachübertragung zwischen zwei benachbarten Wagenkästen eines mehrgliedrigen Schienenfahrzeuges;
- FIG. 2: schematisch eine exemplarische Ausführungsform einer erfindungsgemäßen Schnittstellenanordnung für eine Daten-, Signal- und/oder Sprachübertragung zwischen zwei benachbarten Wagenkästen eines mehrgliedrigen Schienenfahrzeuges;
- FIG. 3: eine exemplarische Ausführungsform der erfindungsgemäßen Schnittstellenanordnung; und
- FIG. 4: eine weitere exemplarische Ausführungsform der erfindungsgemäßen Schnittstellenanordnung.

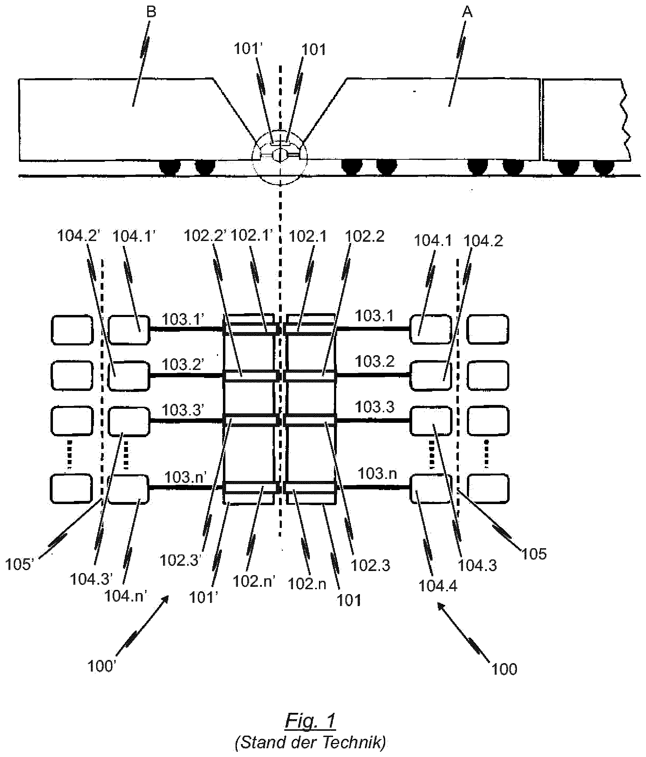

FIG. 1 zeigt schematisch eine aus dem Stand der Technik bekannte Schnittstellenanordnung 100 für eine Daten-, Signal- und/oder Sprachübertragung zwischen zwei benachbarten Wagenkästen A, B eines mehrgliedrigen Schienenfahrzeuges. Die herkömmliche Schnittstellenanordnung 100 weist eine dem ersten Wagenkasten A zugeordnete Elektrokontaktkupplung 101 sowie eine komplementär hierzu ausgebildete und dem zweiten Wagenkasten B zugeordnete Gegen-Elektrokontaktkupplung 101' auf. Bei dem in FIG. 1 schematisch dargestellten Ausführungsbeispiel sind die beiden Elektrokontaktkupplungen 101, 101' jeweils einer (mechanischen) Mittelpufferkupplung zugeordnet. Über die Kupplungsköpfe der mechanischen Mittelpufferkupplung werden im Fahrbetrieb Zug- und Drucckräfte zwischen den benachbarten Wagenkästen A, B übertragen, während über die Elektrokontaktkupplungen 101, 101' insbesondere die Daten-, Signal- und/oder Sprachübertragung erfolgt.

Der Darstellung in FIG. 1 ist ferner zu entnehmen, dass die bei der herkömmlichen Schnittstellenanordnung 100 zum Einsatz kommenden Elektrokontaktkupplungen 101, 101' eine Vielzahl von kupplungsebenenseitigen Kupplungskontakte 102.1 bis 102.n aufweist. Jeder dieser kupplungsebenenseitigen Kupplungskontakte 102.1 bis 102.n ist ausgebildet, eine Verbindung mit entsprechend komplementär ausgebildeten Kupplungskontakten 102.1' bis 102.n' der Gegen-Elektrokontaktkupplung 101' auszubilden.

Über die einzelnen kupplungsebenenseitigen Kupplungskontakte 102.1 bis 102.n werden Daten und/oder Signale für unterschiedliche Anwendungen übertragen. Beispielsweise dient der erste Kupplungskontakt 102.1 dazu, Daten und/oder Signale der Bremssteuerung zu dem entsprechend komplementär ausgebildeten Kupplungskontakt 102.1' der Gegen-Elektrokontaktkupplung 101' zu übertragen, während der zweite Kupplungskontakt 102.2 zum Übertragen von Daten und/oder Signalen für die Türsteuerung dient. Die anderen Kupplungskontakte 102.3 bis 102.n sind der Daten- und/oder Signalübertragung für andere Anwendungen zugeordnet.

Die einzelnen kupplungsebenenseitigen Kupplungskontakte 102.1 bis 102.n sind gemeinsam in dem Gehäuse der Elektrokontaktkupplung 101 integriert. Diese Kupplungskontakte 102.1 bis 102.n sind rückseitig über entsprechende, d.h. über mehrere spezifische Leitungskategorien (EN 50343) zugeordnete Verkabelungen 103.1 bis 103.n mit den entsprechend zugeordneten, wagenkastenseitigen Kupplungskontakten 104.1 bis 104.n verbunden. Diese wagenkastenseitigen Kupplungskontakte 104.1 bis 104.n bilden den kupplungsseitigen Teil einer elektrischen Kupplung-Zug-Schnittstelle 105 aus.

Da bei der in FIG. 1 schematisch dargestellten herkömmlichen Schnittstellenanordnung 100 den einzelnen Anwendungen und Diensten (Bremssteuerung, Traktionssteuerung, Notbremssystem, Türsteuerung, Fahrgastinformation, etc.) diskrete Kupplungskontakte 102.1 bis 102.n in der Elektrokontaktkupplung 101 zugeordnet sind, ist es bei der herkömmlichen Schnittstellenanordnung 100 üblich, für die Verkabelung 103.1 bis 103.n entsprechende anwendungs- bzw. dienstspezifische Verkabelungen gemäß EMV-Leitungskategorie (EN 50343) zu wählen. Dies hat zur Folge, dass bei der herkömmlichen Schnittstellenanordnung 100 eine hohe Anzahl unterschiedlicher Kupplungskontakte 102.1 bis 102.n, Leitungen 103.1 bis 103.n und Kabeltypen zum Einsatz kommt, was sich letztendlich nachteilig bei Bestrebungen zur Standardisierung und Vereinheitlichung der Schnittstellenanordnung 100 auswirkt.

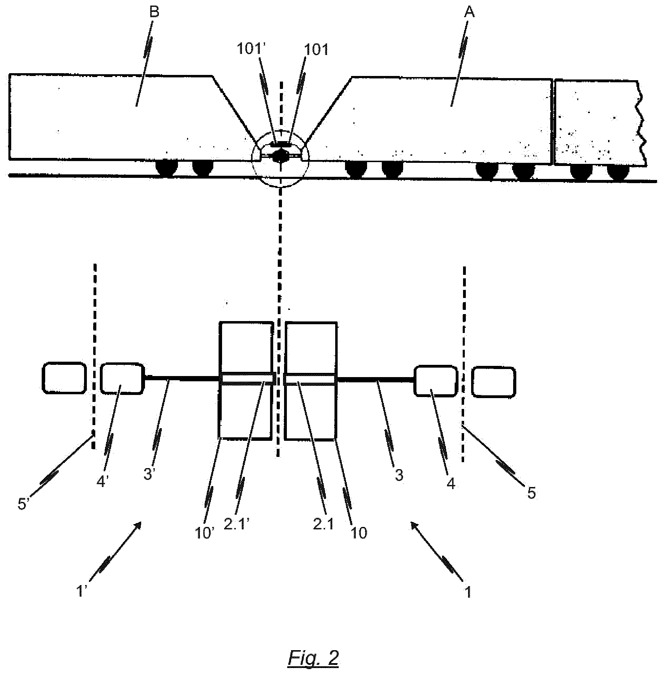

In FIG. 2 ist schematisch eine exemplarische Ausführungsform der erfindungsgemäßen Schnittstellenanordnung 1 gezeigt. Wie auch die zuvor unter Bezugnahme auf die Darstellung in FIG. 1 beschriebene, aus dem Stand der Technik bekannte Schnittstellenanordnung 100 dient die schematisch in FIG. 2 gezeigte Schnittstellenanordnung 1 gemäß der Erfindung zur Daten-, Signal- und/oder Sprachübertragung zwischen zwei benachbarten Wagenkästen A, B eines mehrgliedrigen Fahrzeuges, insbesondere spurgeführten Fahrzeuges. Die Schnittstellenanordnung 1 weist hierzu eine dem ersten Wagenkasten A zugeordnete Elektrokontaktkupplung 10 auf, die zur Daten-, Signal- und/oder Sprachübertragung mit einer entsprechend komplementär hierzu ausgebildeten Gegen-Elektrokontaktkupplung 10' kuppelbar ist. Die Elektrokontaktkupplung 10 kann - wie bei der schematischen Ausführungsform gemäß FIG. 2 angedeutet - an dem Kupplungskopf einer (mechanischen) Kupplung, insbesondere Mittelpufferkupplung, angeordnet sein, wobei dieser Kupplungskopf der mechanischen Kupplung dazu dient, die im Fahrbetrieb auftretenden Zug- und Stoßkräfte zwischen den miteinander gekuppelten Wagenkästen A, B zu übertragen.

Denkbar allerdings ist es auch, wenn die Elektrokontaktkupplung 10 alleine, d.h. ohne dem Kupplungskopf einer (mechanischen) Kupplung zum Einsatz kommt, um eine Daten-, Signal- und/oder Sprachübertragung zwischen benachbarten Fahrzeugeinheiten (Zugeinheiten) zu ermöglichen.

Bei der erfindungsgemäßen Schnittstellenanordnung 1 gemäß FIG. 2 weist die Elektrokontaktkupplung 10 ein Kupplungsgehäuse auf, in welchem mindestens ein kupplungsebenenseitiger Kupplungskontakt (bei der Darstellung in FIG. 2 genau ein kupplungsebenenseitiger Kupplungskontakt integriert ist). Dieser mindestens eine kupplungsebenenseitige Kupplungskontakt 2 bildet die eigentliche Schnittstelle zwischen der Elektrokontaktkupplung 10 und der Gegen-Elektrokontaktkupplung 10' des benachbarten Wagenkastens B.

Der mindestens eine kupplungsebenenseitige Kupplungskontakt 2 der Elektrokontaktkupplung 10 ist über eine Verkabelung 3 mit einem wagenkastenseitigen Kupplungskontakt 4 verbunden, wobei dieser wagenkastenseitige Kupplungskontakt 4 ein Teil einer elektrischen Kupplung-Zug-Schnittstelle 5 ausbildet.

Im Unterschied zu der aus dem Stand der Technik bekannten, herkömmlichen Schnittstellenanordnung 100 gemäß der schematischen Darstellung in FIG. 1 ist bei der exemplarischen Ausführungsform der erfindungsgemäßen Schnittstellenanordnung 1 gemäß der Darstellung in FIG. 2 eine optimierte Leittechnikstruktur vorgesehen, die es erlaubt, die Anzahl der beim Stand der Technik verwendeten, heterogenen Einzel-Leitungen (Verkabelungen 103.1 bis 103.n) deutlich zu reduzieren. Im Einzelnen ist bei der exemplarischen Ausführungsform gemäß FIG. 2 vorgesehen, dass der mindestens eine kupplungsebenenseitige Kupplungskontakt 2 der Elektrokontaktkupplung 10 über eine ausschließlich datenbusfähige Verbindungstechnik mit der elektrischen Kupplung-Zug-Schnittstelle 5 bzw. dem entsprechenden wagenkastenseitigen Kupplungskontakt 4 der elektrischen Kupplung-Zug-Schnittstelle 5 verbunden ist. Durch die Verwendung einer in der Anzahl reduzierten datenbusgestützten Verbindung als Verkabelung 3 kann eine Verbesserung der Wartbarkeit, Diagnosefähigkeit, Konfigurierbarkeit (Software) und Skalierbarkeit der gesamten Schnittstellenanordnung 1 erzielt werden.

In vorteilhafter Weise kommt als Verkabelung 3 zwischen dem mindestens einen kupplungsebenenseitigen Kupplungskontakt 2 und dem mindestens einen zugeordneten wagenkastenseitigen Kupplungskontakt 4 eine einheitliche Datenbusverkabelung, d.h. eine Datenbusverkabelung einer einheitlichen EMV-Leitungskategorie "C" (EN 50343) sowie einer Link-Klasse "D" (ISO/IEC 11801), , so dass der Aufbau der Elektrokontaktkupplung 10 sowie der elektrischen Kupplung-Zug-Schnittstelle 5 maßgeblich vereinfacht werden kann.

Bei der in FIG. 2 schematisch dargestellten Ausführungsform der erfindungsgemäßen Schnittstellenanordnung ist die dem ersten Wagenkasten A zugeordnete Elektrokontaktkupplung 10 in vorteilhafter Weise mit einer Gegen-Elektrokontaktkupplung 10' gekuppelt, die komplementär zu der Elektrokontaktkupplung 10 ausgeführt ist. Um Wiederholungen zu vermeiden, wird von daher auf eine detaillierte Beschreibung dem zweiten Wagenkasten B zugeordneten Schnittstellenanordnung 1' verzichtet. Die entsprechenden Komponenten der Schnittstellenanordnung 1', d.h. der Schnittstellenanordnung 1', die dem zweiten Wagenkasten B zugeordnet ist, sind mit den gleichen Bezugsziffern bezeichnet, wie die Komponenten der an dem ersten Wagenkasten A zugeordneten Schnittstellenanordnung 1, wobei jedoch für die Bezugsziffern der Komponenten der dem zweiten Wagenkasten B zugeordneten Schnittstellenanordnung 1' ein entsprechendes Apostroph verwendet wurde.

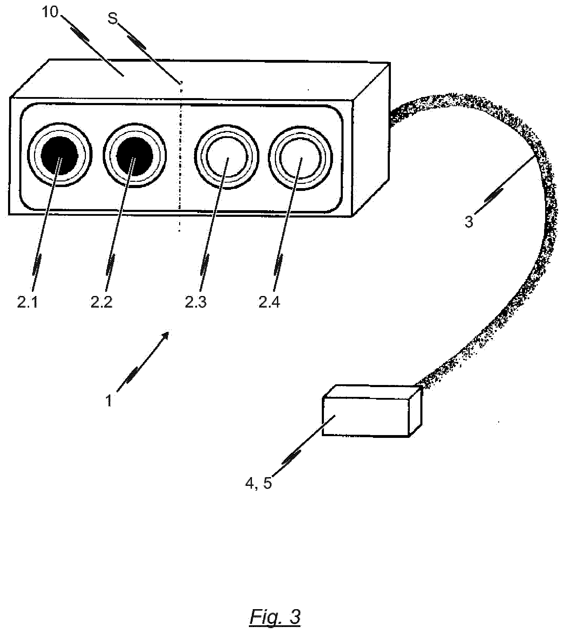

In FIG. 3 ist eine exemplarische Ausführungsform einer Schnittstellenanordnung 1 in einer isometrischen Darstellung gezeigt. Wie dargestellt, sind in dem Kupplungskopf der Elektrokontaktkupplung 10 insgesamt vier kupplungsebenenseitige Kupplungskontakt 2.1, 2.1, 2.3 und 2.4 angeordnet. Diese vier Kupplungskontakte 2.1 bis 2.4 sind in Zweiergruppen aufgeteilt und hinsichtlich einer vertikalen Symmetrieebene S der Elektrokontaktkupplung 10 spiegelsymmetrisch angeordnet. Die Kupplungskontakte 2.1, 2.1; 2.3, 2.4 der jeweiligen Gruppierungen sind entsprechend komplementär zueinander ausgebildet, um ein Kuppel mit einer entsprechend zu der Elektrokontaktkupplung 10 komplementär ausgebildeten Gegen-Elektrokontaktkupplung (in FIG. 3 nicht gezeigt) zu ermöglichen.

Über die einzelnen Kupplungskontakte 2.1, 2.2; 2.3, 2.4 der jeweiligen Zweiergruppen sind physikalisch getrennt zwei Datennetzwerke übertragbar, wobei jedes Datennetzwerk einer bestimmten Anbindung zugeordnet sind. Die Datennetzwerke können hierbei exemplarisch als Ethernet-Netzwerke mit beispielhaft zugeordneter Link-Klasse "D" (ISO/IEC 11801) ausgeführt sein.

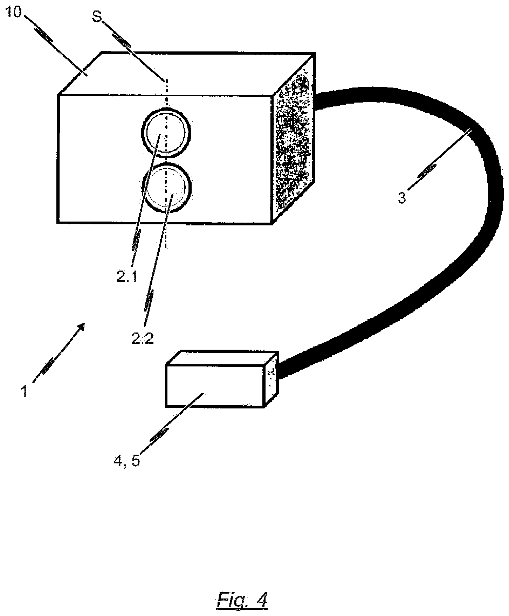

Bei der in FIG. 3 dargestellten Ausführungsform der erfindungsgemäßen Schnittstellenanordnung 1 sind die kupplungsebenenseitigen Kupplungskontakte 2.1 bis 2.4 jeweils als mechanisch wendefähige (hermaphroditische), galvanisch koppelnde Kontakte ausgeführt, wobei die linke Kupplungsseite mit Kupplungskontakten 2.1, 2.2 in Stiftausführung (male) und die rechte Kupplungsseite in Buxenausführung (female) ausgerüstet ist.
In Abhängigkeit der fahrzeugseitigen Netzwerktopologie und dem zu realisierenden Datenbuskonzept sind auch weitere paarige Datenbuskontakte in der Elektrokontaktkupplung 10 anordbar.
Die Verkabelung 3 von den kupplungsebenenseitigen Kupplungskontakten 2.1 bis 2.4 zu dem wagenkastenseitigen Kupplungskontakt 4 bzw. der elektrischen Kupplung-Zug-Schnittstelle bleibt bzgl. der EMV-Leitungskategorie "C" (EN 50343) identisch.
Eine weitere exemplarische Ausführungsform der erfindungsgemäßen Schnittstellenanordnung ist in einer isometrischen Darstellung in FIG. 4 gezeigt. Bei dieser Ausführungsform kommt eine berührungslos arbeitende Kontakttechnologie zur Daten-, Signal- und/oder Sprachübertragung zwischen zwei benachbarten Elektrokontaktkupplungen zum Einsatz. Bei diesen berührungslos arbeitenden Kontakttechnologien kann es sich beispielsweise um optische, elektromagnetische, kapazitive und/oder induktive Technologien handeln.

Durch den Einsatz von berührungslos arbeitender Kontakttechnologie bei den kupplungsebenenseitigen Kupplungskontakten kann das Kuppelbild der Elektrokontaktkupplung 10 variabel gestaltet werden, da hier die mechanische Wendefähigkeit nicht berücksichtigt muss. Insbesondere ist es in diesem Zusammenhang von Vorteil, wenn die kupplungsebenenseitigen Kupplungskontakte 2.1 und 2.2 in der vertikalen Symmetrieebene der Elektrokontaktkupplung 10 angeordnet sind.
Die Erfindung ist nicht auf die in den Zeichnungen exemplarisch dargestellten Ausführungsformen der erfindungsgemäßen Schnittstellenanordnung beschränkt, sondern ergibt sich aus einer Zusammenschau sämtlicher hierin offenbarter Merkmale, die im Schutzbereich der Ansprüche liegen.

Insbesondere ist es in diesem Zusammenhang denkbar, über die datenbusfähige Verkabelung 3 eine Stromversorgung zumindest für die Komponenten der Elektrokontaktkupplung (Kupplungskontakte) oder aber auch für andere Datenbusangebundene Komponenten zu realisieren. Bei Anwendungen mit Ethernet-Netzwerken bietet sich hierfür insbesondere das bereits etablierte PoE (Power over Ethernet) Verfahren an. Auch hier kann die Verkabelung entsprechend der EMV-Leitungskategorie "C" (EN 50343) identisch bleiben. Wie bereits angedeutet, kann auch auf eine mechanische Kupplung verzichtet werden, wodurch sich weitere geometrische Freiheiten in der Gestaltung der Schnittstelle zwischen zwei benachbarten Wagenkästen des mehrgliedrigen Fahrzeuges ergeben.

### Bezugszeichenliste

- 1: Schnittstellenanordnung
- 2.1 bis 2.4: kupplungsebenenseitiger Kupplungskontakt
- 3: datenbusfähige Verkabelung
- 4: wagenkastenseitiger Kupplungskontakt
- 5: elektrische Kupplung-Zug-Schnittstelle
- 10: Elektrokontaktkupplung

- 100: Schnittstellenanordnung (Stand der Technik)
- 101: Elektrokontaktkupplung (Stand der Technik)
- 102.1 bis 102.n: kupplungsebenenseitiger Kupplungskontakt (Stand der Technik)
- 103.1 bis 103.n: Verkabelung (Stand der Technik)
- 104.1 bis 104.n: wagenkastenseitiger Kupplungskontakt (Stand der Technik)
- 105: elektrische Kupplung-Zug-Schnittstelle (Stand der Technik)

- A, B: Wagenkasten
- S: vertikale Symmetrieebene der Elektrokontaktkupplung

## Patentansprüche

1. Schnittstellenanordnung (1) für eine Daten-, Signal- und/oder Sprachübertragung zwischen zwei benachbarten Wagenkästen (A, B) eines mehrgliedrigen Fahrzeuges, insbesondere spurgeführten Fahrzeuges, wobei die Schnittstellenanordnung (1) eine einem ersten Wagenkasten (A) zugeordnete Elektrokontaktkupplung (10) mit mindestens einem kupplungsebenenseitigen Kupplungskontakt (2.1, ..., 2.4) aufweist zur Daten-, Signal- und/oder Sprachübertragung mit einer Gegen-Elektrokontaktkupplung (10') eines im ersten Wagenkasten (A) benachbarten zweiten Wagenkastens (B),
**dadurch gekennzeichnet, dass**
der mindestens eine kupplungsebenenseitige Kupplungskontakt (2.1, ..., 2.4) ausschließlich über eine Datenbusverkabelung mit einem wagenkastenseitigen Kupplungskontakt (4) einer elektrischen Kupplung-Zug-Schnittstelle (5) verbunden ist.

2. Schnittstellenanordnung (1) nach Anspruch 1,
wobei die Datenbusverkabelung eine datenbusfähige Verkabelung (3) ist, welche im Hinblick auf die Spezifizierung der Übertragungsstrecke zu einer vorab festgelegten, einheitlichen EMV-Leitungskategorie und einer spezifizierten Link-Klasse gehört.

3. Schnittstellenanordnung (1) nach Anspruch 1 oder 2,
wobei die datenbusfähige Verkabelung (3) zur Klasse "D" nach ISO/IEC 11801 (Stand: Anmeldetag) gehört.

4. Schnittstellenanordnung (1) nach einem der Ansprüche 1 bis 3, wobei der mindestens eine kupplungsebenenseitige Kupplungskontakt (2.1, ..., 2.4) ausschließlich über die Datenbusverkabelung mit dem wagenkastenseitigen Kupplungskontakt (4) der elektrischen Kupplung-Zug-Schnittstelle (5) verbunden ist.

5. Schnittstellenanordnung (1) nach einem der Ansprüche 1 bis 4, wobei die Datenbusverkabelung ausgebildet ist, mindestens zwei physikalisch getrennte Übertragungswege für unterschiedliche Dienste bereitzustellen.

6. Schnittstellenanordnung (1) nach Anspruch 5,
wobei mindestens ein von der Datenbusverkabelung bereitgestellter Übertragungsweg zur Daten-, Signal- und/oder Sprachübertragung für eine Fahrzeugsteuerung ausgebildet ist, und wobei mindestens ein anderer von der Datenbusverkabelung bereitgestellter Übertragungsweg zur Daten-, Signal- und/oder Sprachübertragung für ein Fahrzeug-Entertainmentsystem ausgebildet ist.

7. Schnittstellenanordnung (1) nach einem der Ansprüche 1 bis 6, wobei der mindestens eine kupplungsebenenseitige Kupplungskontakt (2.1, ..., 2.4) mindestens eine Datenbussteckverbindung und/oder mindestens einen berührungslos arbeitenden Kupplungskontakt aufweist.

8. Schnittstellenanordnung (1) nach einem der Ansprüche 1 bis 7, wobei die Elektrokontaktkupplung (10) mindestens einen ersten kupplungsebenenseitigen Kupplungskontakt (2.1, 2.2; 2.3, 2.4) und mindestens einen zweiten, im Hinblick auf den mindestens einen ersten kupplungsebenenseitigen Kupplungskontakt (2.1, 2.2; 2.3, 2.4) komplementär ausgeführten kupplungsebenenseitigen Kupplungskontakt (2.3, 2.4; 2.1, 2.2) aufweist zum Übertragen von mindestens zwei physikalisch getrennten Ethernet-Netzwerken, wobei der mindestens eine erste und der mindestens eine zweite kupplungsebenenseitige Kupplungskontakt (2.1, ..., 2.4) hinsichtlich einer vertikalen Symmetrieebene (S) der Elektrokontaktkupplung (10) spiegelsymmetrisch angeordnet sind.

9. Schnittstellenanordnung (1) nach einem der Ansprüche 1 bis 7,
wobei die Elektrokontaktkupplung (10) mindestens einen kupplungsebenenseitigen Kupplungskontakt (2.1, ..., 2.4) aufweist, welcher auf einer vertikalen Symmetrieebene (S) der Elektrokontaktkupplung (10) angeordnet ist, wobei der mindestens eine kupplungsebenenseitige Kupplungskontakt (2.1, ..., 2.4) zur berührungslosen Daten-, Signal- und/oder Sprachübertragung ausgebildet ist.

10. Automatische Mittelpufferkupplung für ein spurgeführtes Fahrzeug, insbesondere Schienenfahrzeug, zum mechanischen Verbinden zweier benachbarter Wagenkästen (A, B) eines mehrgliedrigen Fahrzeuges, wobei die automatische Mittelpufferkupplung ferner eine Schnittstellenanordnung (1) nach einem der Ansprüche 1 bis 9 aufweist.

## Claims

1. An interface arrangement (1) for data, signal and/or voice transmission between two adjacent railcar bodies (A, B) of a multi-member vehicle, in particular a track-guided vehicle, wherein the interface arrangement (1) comprises an electrical contact coupling (10) allocated to a first railcar body (A) which has at least one coupling plane-side coupling contact (2.1, ..., 2.4) for data, signal and/or voice transmission with a mating electrical contact coupling (10') of a second railcar body (B) adjacent to the first railcar body (A),
**characterized in that**
the at least one coupling plane-side coupling contact (2.1, ..., 2.4) is solely connected to a railcar body-side coupling contact (4) of an electrical coupling/train interface (5) by a data bus cabling.

2. The interface arrangement (1) according to claim 1,
wherein the data bus cabling is a data bus-capable cabling (3) of a predefined standardized EMC cable category and specified link class in terms of transmission path specification.

3. The interface arrangement (1) according to claim 1 or 2,
wherein the data bus cabling (3) is of class "D" pursuant to ISO/IEC 11801 (on the date of filing).

4. The interface arrangement (1) according to one of claims 1 to 3,
wherein the at least one coupling plane-side coupling contact (2.1, ..., 2.4) is solely connected to the railcar body-side coupling contact (4) of the electrical coupling/train interface (5) by the data bus cabling.

5. The interface arrangement (1) according to one of claims 1 to 4,
wherein the data bus cabling is designed to provide at least two physically separate transmission paths for different services.

6. The interface arrangement (1) according to claim 5,
wherein at least one transmission path provided by the data bus cabling for data, signal and/or voice transmission is designed for a vehicle control system, and wherein at least one other transmission path provided by the data bus cabling for data, signal and/or voice transmission is designed for a vehicle entertainment system.

7. The interface arrangement (1) according to one of claims 1 to 6,
wherein the at least one coupling plane-side coupling contact (2.1, ..., 2.4) comprises at least one data bus connector and/or at least one contactless coupling contact.

8. The interface arrangement (1) according to one of claims 1 to 7,
wherein the electrical contact coupling (10) comprises at least one first coupling plane-side coupling contact (2.1, 2.2, 2.3, 2.4) and at least one second coupling plane-side coupling contact (2.3, 2.4, 2.1, 2.2) of complementary design with respect to the at least one first coupling plane-side coupling contact (2.1, 2.2, 2.3, 2.4) for transmitting at least two physically separate Ethernet networks, wherein the at least one first and the at least one second coupling plane-side coupling contact (2.1, ..., 2.4) are mirror-symmetrically arranged with respect to a vertical symmetrical axis (5) of the electrical contact coupling (10).

9. The interface arrangement (1) according to one of claims 1 to 7,
wherein the electrical contact coupling (10) comprises at least one coupling plane-side coupling contact (2.1, ..., 2.4) arranged on a vertical symmetrical axis (5) of the electrical contact coupling (10), wherein the at least one coupling plane-side coupling contact (2.1, ..., 2.4) is designed for contactless data, signal and/or voice transmission.

10. An automatic central buffer coupling for a track-guided vehicle, in particular a rail vehicle, for mechanically connecting two adjacent railcar bodies (A, B) of a multi-member vehicle, wherein the automatic central buffer coupling further comprises an interface arrangement (1) according to one of claims 1 to 9.

## Revendications

1. Dispositif d'interface (1) destiné à une transmission de données, de signaux et/ou de la parole entre deux caisses adjacentes (A, B) d'un véhicule à plusieurs éléments, notamment d'un véhicule sur rail, dans lequel le dispositif d'interface (1) comprend un accouplement de contact électrique (10), associé à une première caisse (A) et avec d'au moins un contact d'accouplement côté plan d'accouplement (2.1,..., 2.4) pour la transmission de données, de signaux et/ou de la parole avec un accouplement de contact électrique homologue (10') d'une seconde caisse (B) adjacente à la première caisse (A),
**caractérisé en ce que**
l'au moins un contact d'accouplement côté plan d'accouplement (2.1,...,2.4) est relié avec un contact d'accouplement côté caisse (4) d'une interface électrique accouplement-train (5) exclusivement par l'intermédiaire d'un câblage de bus de données.

2. Dispositif d'interface (1) selon la revendication 1,
dans lequel le câblage du bus de données est un câblage compatible de bus de données (3), qui, concernant la spécification de la distance de transmission, appartient à une catégorie de ligne CEM prédéfinie et uniforme et à une classe de lien spécifiée.

3. Dispositif d'interface (1) selon la revendication 1 ou 2,
dans lequel le câblage compatible de bus de données (3) appartient à la classe "D" selon ISO/CEI 11801 (état: date du dépôt).

4. Dispositif d'interface (1) selon l'une des revendications 1 à 3,
dans lequel l'au moins un contact d'accouplement du côté plan d'accouplement (2.1,...,2.4) est relié avec le contact d'accouplement côté caisse (4) de l'interface électrique accouplement-train (5) exclusivement par l'intermédiaire d'un câblage de bus de données.

5. Dispositif d'interface (1) selon l'une des revendications 1 à 4,
dans lequel le câblage de bus de données est formé à fournir au moins deux voies de transmission physiquement séparées pour des services différents.

6. Dispositif d'interface (1) selon la revendication 5,
dans lequel au moins une voie de transmission fournie pour la transmission de données, de signaux et/ou de la parole est formée pour un système de contrôle de véhicule par le câblage de bus de données, et dans lequel au moins une autre voie de transmission est formée, fourni par le câblage de bus de données, pour la transmission de données, de signaux et/ou de la parole pour un système de divertissement de véhicule.

7. Dispositif d'interface (1) selon l'une des revendications 1 à 6,
dans lequel l'au moins un contact d'accouplement du côté plan d'accouplement (2.1,...,2.4) comporte au moins une connexion de bus de données et/ou au moins un contact d'accouplement travaillant sans contact.

8. Dispositif d'interface (1) selon l'une des revendications 1 à 7, dans lequel l'accouplement de contact électrique (10) comprend au moins un premier contact d'accouplement côté plan d'accouplement (2.1, 2.2; 2.3, 2.4) et au moins un second contact d'accouplement côté plan d'accouplement (2.1, 2.2; 2.3, 2.4) exécuté complémentairement au premier contact d'accouplement côté plan d'accouplement (2.3, 2.4; 2.1, 2.2) pour la transmission d'au moins deux réseaux Ethernet physiquement séparés, dans lequel l'au moins un premier et l'au moins un seconde contact d'accouplement côté plan d'accouplement (2.1,...,2.4) sont disposés en symétrie speculaire par rapport à un plan vertical de symétrie (S) de l'accouplement de contact électrique (10).

9. Dispositif d'interface (1) selon l'une des revendications 1 à 7, dans lequel l'accouplement de contact électrique (10) comporte au moins un contact d'accouplement du côté plan d'accouplement (2.1,...,2.4), qui est disposé sur un plan vertical de symétrie (S) de l'accouplement de contact électrique (10), l'au moins un contact d'accouplement du côté plan d'accouplement (2.1,...,2.4) étant formé pour la transmission sans contact de données, de signaux et/ou de la parole.

10. Accouplement automatique à tampon central (1) pour un véhicule guidé sur piste, en particulier des véhicules sur rails, pour la connexion mécanique de deux caisses adjacentes (A, B) d'un véhicule à plusieurs éléments,
dans lequel l'accouplement automatique à tampon central (1) comprend en outre un dispositif d'interface (1) selon l'une des revendications 1 à 9 .
